# EUROPEAN PATENT APPLICATION

(11) **EP 4 675 791 A2**
(43) Date of publication of application: **07.01.2026**
(21) Application number: 25178717.2
(22) Date of filing: 26.05.2025
(51) Int. Cl.: H01M 50/209

(54) **POWER STORAGE DEVICE**

(30) Priority: 04.07.2024 JP 2024108164
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi,, 471-8571 (JP); SUGIE, Kazuki, Toyota-shi,, 471-8571 (JP); KUMAZAWA, Kazuya, Toyota-shi,, 471-8571 (JP); HORIGUCHI, Kotaro, Toyota-shi,, 471-8571 (JP)
(74) Representative: TBK

(57) **Abstract**

A power storage device (10) includes: a plurality of power storage cells (100); a plurality of heat insulation members (200); an upper cover (320) disposed above the plurality of power storage cells and the plurality of heat insulation members; a cooler (500) disposed on an upper surface of the upper cover; and a shield portion (600) provided between each of the heat insulation members and the upper cover. Each of the plurality of power storage cells includes: an electrode assembly; a cell case that accommodates the electrode assembly; and an external terminal that protrudes from the cell case in a second direction. The shield portion (600) shields a gap between the upper cover (320) and an end portion of each of the heat insulation members (200) in the second direction.

## Description

### CROSS REFERENCE TO RELATED APPLICATIONS

This nonprovisional application is based on Japanese Patent Application No. 2024-108164 filed on July 4, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2022-525014 discloses a power battery pack including a plurality of cells and a housing device. A module top plate having a cooling structure is disposed on upper surfaces of the plurality of cells.

### SUMMARY

In the power battery pack disclosed in Japanese National Patent Publication No. 2022-525014, there is a concern that, when dew condensation occurs on the module top plate, water droplets therefrom may come into contact with an external terminal of each cell and thereby cause a short circuit.

An object of the present disclosure is to provide a power storage device capable of suppressing occurrence of a short circuit resulting from dew condensation occurring on an upper cover.

A power storage device according to one aspect of the present disclosure includes: a plurality of power storage cells arranged side by side in a first direction; a plurality of heat insulation members, each of the heat insulation members being disposed between a pair of power storage cells adjacent to each other among the plurality of power storage cells; an upper cover disposed above the plurality of power storage cells and the plurality of heat insulation members; a cooler that cools the plurality of power storage cells, the cooler being disposed on an upper surface of the upper cover; and a shield portion provided between each of the heat insulation members and the upper cover. Each of the plurality of power storage cells includes: an electrode assembly; a cell case that accommodates the electrode assembly; and an external terminal that protrudes from the cell case in a second direction orthogonal to both the first direction and an upward-downward direction. The shield portion shields a gap between the upper cover and an end portion of each of the heat insulation members in the second direction.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is a diagram schematically showing a vehicle including a power storage device in one embodiment of the present disclosure.
Fig. 2 is a perspective view schematically showing the power storage device and a frame member.
Fig. 3 is a cross-sectional view taken along a line III-III in Fig. 2.
Fig. 4 is a cross-sectional view taken along a line IV-IV in Fig. 3.
Fig. 5 is a cross-sectional view taken along a line V-V in Fig. 3.
Fig. 6 is a diagram showing the vicinity of a shield portion.
Fig. 7 is a cross-sectional view taken along a line VII-VII in Fig. 6.
Fig. 8 is a cross-sectional view showing a modification of a heat insulation member.

### DESCRIPTION OF THE PREFERRED EMBODIMENTS

An embodiment of the present disclosure will be hereinafter described with reference to the accompanying drawings. In the drawings referred to below, the same or corresponding members are denoted by the same reference characters.

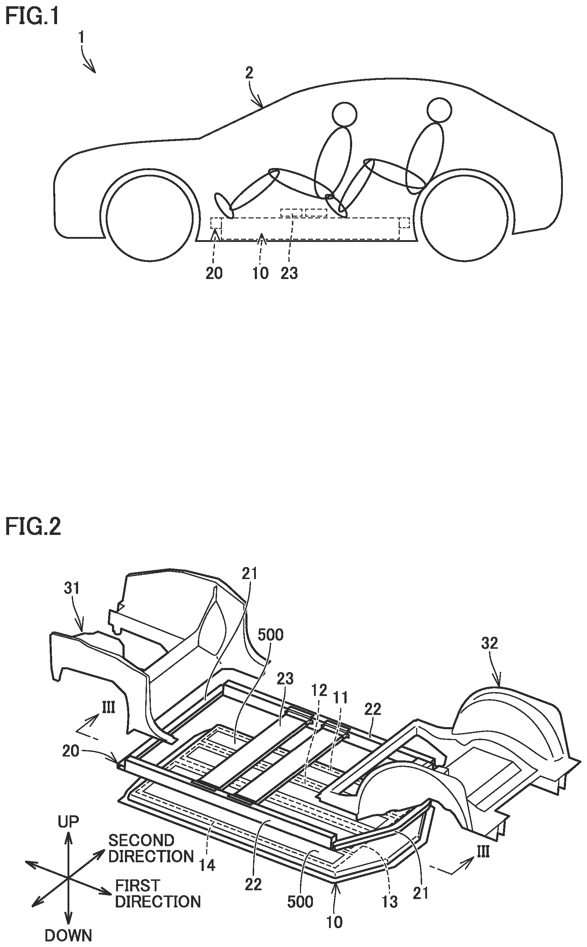

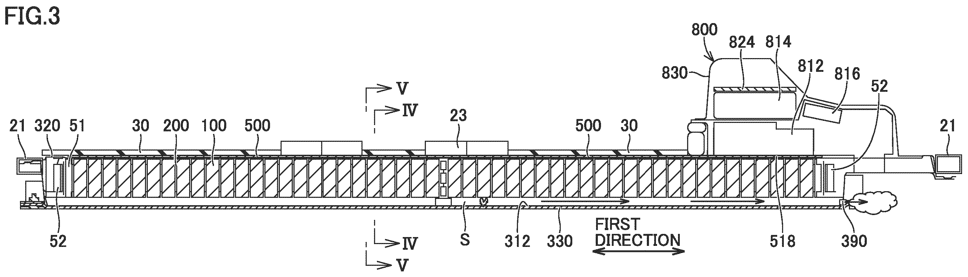

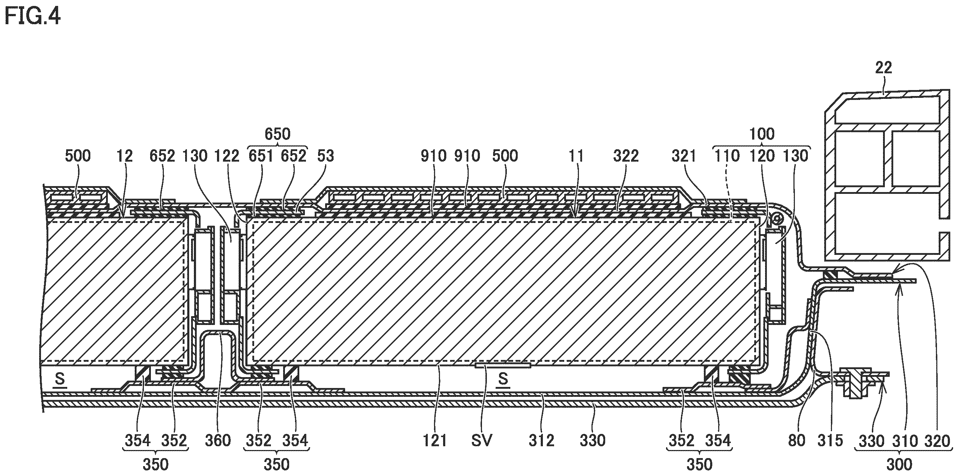

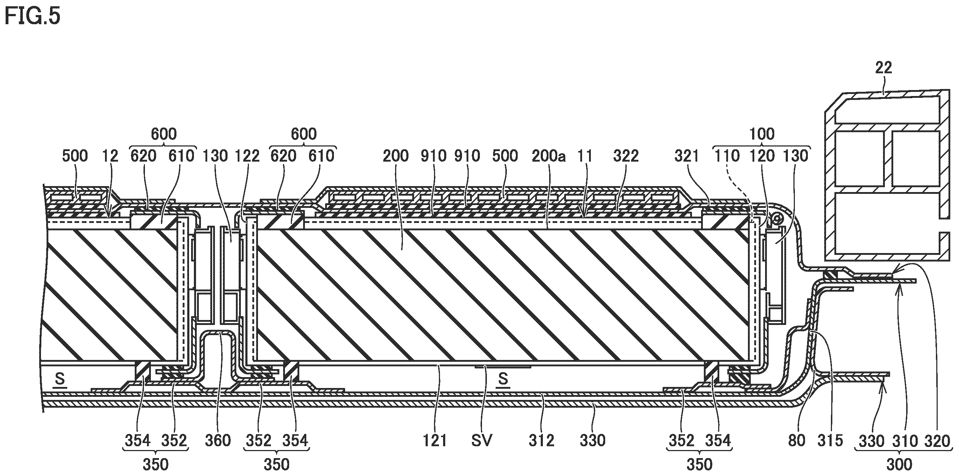

Fig. 1 is a diagram schematically showing a vehicle including a power storage device in one embodiment of the present disclosure. Fig. 2 is a perspective view schematically showing the power storage device and a frame member. Fig. 3 is a cross-sectional view taken along a line III-III in Fig. 2. Fig. 4 is a cross-sectional view taken along a line IV-IV in Fig. 3. Fig. 5 is a cross-sectional view taken along a line V-V in Fig. 3.

As shown in Fig. 1, a vehicle 1 includes a vehicle body 2 and a power storage device 10. Examples of vehicle 1 include a hybrid electric vehicle, a plug-in hybrid electric vehicle, and a battery electric vehicle.

As shown in Figs. 1 and 2, vehicle body 2 includes a frame member 20. Frame member 20 is disposed on a bottom portion of vehicle body 2. Frame member 20 includes a pair of first frames 21, a pair of second frames 22, and a cross frame 23.

The pair of first frames 21 face each other in a first direction. Each first frame 21 is shaped to extend in a second direction orthogonal to both the first direction and an upward-downward direction. For example, the first direction may be parallel to a front-rear direction of vehicle 1, and the second direction may be parallel to a left-right direction (a width direction) of vehicle 1.

The pair of second frames 22 face each other in the second direction. Each second frame 22 is shaped to extend in the first direction. An end portion of each second frame 22 in the first direction is connected to first frame 21. The pair of second frames 22 are arranged in a substantially quadrangular cylindrical shape together with the pair of first frames 21 to surround power storage device 10.

Cross frame 23 is disposed between the pair of first frames 21 and couples the pair of second frames 22 to each other. Cross frame 23 forms, for example, a seat cross.

Power storage device 10 is attached to frame member 20. As shown in Fig. 2, power storage device 10 is disposed below cross frame 23. As shown in Figs. 1 to 5, power storage device 10 includes four power storage stacks 11 to 14, a housing 300, a cooler 500, a shield portion 600, a gap filling portion 650, and a device unit 800. The number of power storage stacks is not limited to four.

Each of power storage stacks 11 to 14 is formed in a rectangular parallelepiped shape elongated in the first direction. As shown in Fig. 2, four power storage stacks 11 to 14 are arranged side by side in the second direction. Each of power storage stacks 11 to 14 includes a plurality of (for example, fifty) power storage cells 100 and a plurality of heat insulation members 200.

The plurality of power storage cells 100 are arranged side by side in the first direction. As shown in Fig. 4, each power storage cell 100 includes an electrode assembly 110, a cell case 120, and a pair of external terminals 130.

Electrode assembly 110 may be formed of a wound body implemented by winding a positive electrode sheet and a negative electrode sheet with a separator being interposed therebetween, or may be formed of a stacked body implemented by stacking a positive electrode sheet and a negative electrode sheet with a separator being interposed therebetween. Electrode assembly 110 is formed in a shape elongated in the second direction.

Cell case 120 accommodates electrode assembly 110. Cell case 120 is formed in a rectangular parallelepiped shape. Cell case 120 is made of metal such as aluminum. Cell case 120 has a lower surface 121 provided with a safety valve SV.

The pair of external terminals 130 are provided on respective side surfaces 122 of cell case 120 in the width direction orthogonal to both the upward-downward direction and a thickness direction of cell case 120. One of the pair of external terminals 130 protrudes in the width direction from one side surface 122 of cell case 120 in the width direction. The other of the pair of external terminals 130 protrudes in the width direction from the other side surface 122 of cell case 120 in the width direction. The width direction corresponds to the second direction.

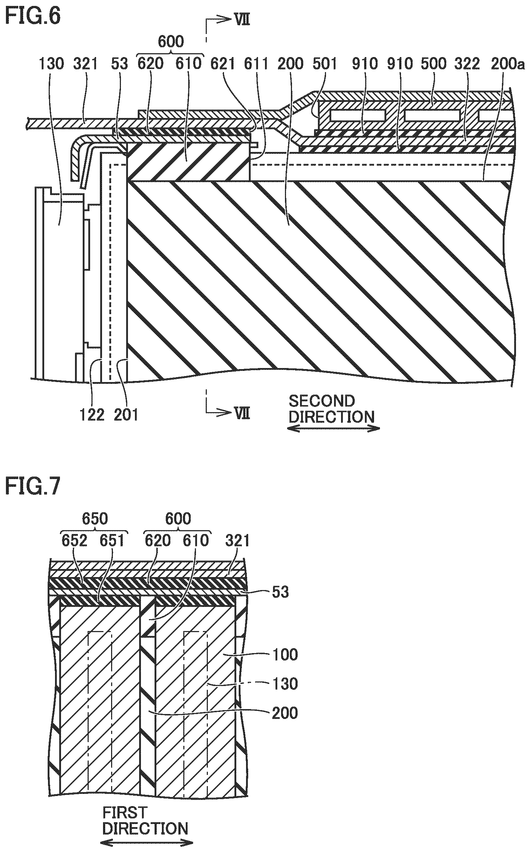

Each heat insulation member 200 is disposed between a pair of power storage cells 100 adjacent to each other in the first direction. As shown in Fig. 5, each heat insulation member 200 is in contact with at least a central portion of cell case 120 in the second direction. Heat insulation member 200 is formed in a rectangular shape elongated in the second direction. As shown in Figs. 3 and 7, heat insulation member 200 is smaller in dimension (thickness) in the first direction than power storage cell 100.

As shown in Fig. 3, a pair of end plates 51 that sandwich the plurality of power storage cells 100 from both sides in the first direction are provided on both sides of the plurality of power storage cells 100 in the first direction. A monitoring unit (smart battery management) 52 is disposed outside each end plate 51 in the first direction.

Each of power storage stacks 11 to 14 is restrained from both sides in the first direction by a restraint band 53 (see Figs. 4 and 5) and the pair of end plates 51.

Housing 300 accommodates four power storage stacks 11 to 14. As shown in Figs. 4 and 5, housing 300 includes a lower case 310, an upper cover 320, a panel member 330, a spacer member 350, and a cross member 360.

Lower case 310 is opened upward. Lower case 310 has a bottom surface 312 and a peripheral wall 315.

Bottom surface 312 is located below each of power storage stacks 11 to 14. Bottom surface 312 may be formed in a flat plate shape.

Peripheral wall 315 rises from a peripheral edge portion of bottom surface 312. Peripheral wall 315 is shaped to surround lower portions of power storage stacks 11 to 14.

Upper cover 320 is disposed above the plurality of power storage cells 100 and the plurality of heat insulation members 200. In the present embodiment, upper cover 320 is disposed above four power storage stacks 11 to 14. Together with lower case 310, upper cover 320 accommodates four power storage stacks 11 to 14. Specifically, together with lower case 310, upper cover 320 accommodates four power storage stacks 11 to 14 in a hermetically sealed state. Upper cover 320 has a peripheral edge portion connected to a peripheral edge portion of lower case 310 with bolts or the like with a seal member being interposed therebetween.

Upper cover 320 has a top portion 321 and four recess portions 322.

Top portion 321 is formed to be flat. Top portion 321 overlaps, in the upward-downward direction, with an end portion of each power storage stack in the second direction.

Each recess portion 322 is recessed downward from top portion 321. Each recess portion 322 is formed to be flat. Each recess portion is formed above a central portion of each of the power storage stacks in the second direction. As shown in Figs. 4 and 5, each recess portion 322 is shorter in the second direction than power storage cell 100. Each recess portion 322 is in contact with an upper surface of cell case 120 with a thermally conductive adhesive 910 being interposed therebetween.

Panel member 330 is provided below lower case 310. Panel member 330 has a function of protecting lower case 310. Panel member 330 may be formed in a flat plate shape. As shown in Figs. 4 and 5, panel member 330 has a peripheral edge portion connected to lower case 310 through a bracket 80.

Together with bottom surface 312 of lower case 310, spacer member 350 provides a space S below each of power storage stacks 11 to 14. Spacer member 350 is provided between bottom surface 312 and each of power storage stacks 11 to 14. In other words, in the present embodiment, four spaces S are provided inside housing 300.

Each space S functions as a smoke discharge path (hereinafter referred to as a "smoke discharge path S"). Smoke discharge path S serves as a path through which the gas discharged from safety valve SV is discharged to the outside of housing 300. When gas is discharged from safety valve SV of power storage cell 100, the gas flows into smoke discharge path S. Each smoke discharge path S is connected to a common space inside housing 300 at an end portion of smoke discharge path S in the first direction.

As shown in Fig. 3, an explosion-proof valve 390 is provided in a portion of peripheral wall 315 that faces smoke discharge path S in the first direction. Explosion-proof valve 390 is provided in the above-mentioned common space inside housing 300. Explosion-proof valve 390 releases the pressure inside housing 300. Explosion-proof valve 390 opens when the pressure inside housing 300 becomes equal to or higher than a reference value. Explosion-proof valve 390 is formed of a check valve. As shown in Fig. 3, when gas is discharged from one of power storage cells 100, the gas spreads in the first direction through smoke discharge path S and is discharged to the outside of housing 300 through explosion-proof valve 390.

As shown in Figs. 4 and 5, spacer member 350 includes a base portion 352 and a seal portion 354.

Base portion 352 is connected to bottom surface 312 of lower case 310 by welding or the like. Base portion 352 extends in the first direction. Base portion 352 is located below an end portion of cell case 120 in the second direction.

Seal portion 354 serves to seal between base portion 352 and each of power storage stacks 11 to 14. Seal portion 354 supports each of power storage stacks 11 to 14.

Cross member 360 is connected by welding or the like to a pair of base portions 352 adjacent to each other in the second direction. For example, Figs. 4 and 5 each show cross member 360 provided between power storage stack 11 disposed on the outermost side in the second direction and power storage stack 12 adjacent to power storage stack 11. Cross member 360 extends in the first direction. Cross member 360 is connected to peripheral wall 315. Cross member 360 may be connected to the pair of first frames 21 through brackets (not shown).

Cooler 500 cools each of power storage stacks 11 to 14. A cooling medium (water or the like) flows through cooler 500. As shown in Figs. 3 to 5, cooler 500 is disposed on an upper surface of upper cover 320. Specifically, cooler 500 is disposed in recess portion 322.

Thermally conductive adhesive 910 is provided between each cooler 500 and recess portion 322. Thermally conductive adhesive 910 extends in the first direction. Each cooler 500 is in thermal contact with an upper surface of each power storage cell 100. In the present embodiment, each cooler 500 is in contact with the upper surface of each power storage cell 100 with thermally conductive adhesive 910 and upper cover 320 being interposed therebetween. Note that the state of being in thermal contact includes the state in which cooler 500 is in contact with power storage cell 100 with only upper cover 320 being interposed therebetween, and the state in which cooler 500 is in indirect contact with power storage cell 100 with a thermally conductive member (an adhesive, a fixing member, or the like) being interposed therebetween.

As shown in Fig. 3, cooler 500 forms at least a part of a floor portion 30 of a vehicle cabin. Floor portion 30 of the vehicle cabin may include, in addition to cooler 500, a shock absorbing member, a carpet, and the like disposed on cooler 500. Fig. 2 does not show such a shock absorbing member, a carpet, and the like.

As shown in Figs. 5 and 6, an end portion 201 of heat insulation member 200 in the second direction is formed at a position closer to the central portion of cell case 120 in the second direction than side surface 122 of cell case 120 in the second direction is to the central portion of cell case 120. End portion 201 of heat insulation member 200 in the second direction is formed at a position farther from the central portion of cell case 120 in the second direction than a side portion 501 of cooler 500 in the second direction is from the central portion of cell case 120.

Shield portion 600 is provided between heat insulation member 200 and upper cover 320. Shield portion 600 shields a gap between upper cover 320 and the end portion of heat insulation member 200 in the second direction. As shown in Figs. 5 to 7, shield portion 600 includes a lower shield element 610 and an upper shield element 620.

Lower shield element 610 is in contact with an upper surface 200a of heat insulation member 200 and a lower surface of restraint band 53. Lower shield element 610 may be formed of an adhesive member. Lower shield element 610 may be formed of the same material as the material of heat insulation member 200, and may be formed integrally with heat insulation member 200. As shown in Fig. 6, an inner end surface 611 of lower shield element 610 in the second direction is formed at a position farther from the central portion of cell case 120 in the second direction than side surface 501 of cooler 500 in the second direction is from the central portion of cell case 120.

Upper shield element 620 is in contact with an upper surface of restraint band 53 and a lower surface of top portion 321 of upper cover 320. Upper shield element 620 may be formed of an adhesive member. As shown in Fig. 6, an inner end surface 621 of upper shield element 620 in the second direction is formed at a position farther from the central portion of cell case 120 in the second direction than side surface 501 of cooler 500 in the second direction is from the central portion of cell case 120.

Gap filling portion 650 fills a gap between upper cover 320 and the end portion of cell case 120 in the second direction. Gap filling portion 650 may be formed of an adhesive member. As shown in Figs. 4 and 7, gap filling portion 650 includes a lower filling portion 651 and an upper filling portion 652.

Lower filling portion 651 fills a gap between the upper surface of cell case 120 and restraint band 53. As shown in Fig. 7, an end portion of lower filling portion 651 in the first direction is in contact with lower shield element 610.

Upper filling portion 652 fills a gap between restraint band 53 and top portion 321 of upper cover 320. Upper filling portion 652 may be made of the same material as that of upper shield element 620 and formed integrally with upper shield element 620. In this case, as shown in Fig. 7, upper filling portion 652 and upper shield element 620 are continuously connected in the first direction.

Device unit 800 is disposed, for example, at an end portion in the first direction. In the present embodiment, device unit 800 is disposed on a rear portion of upper cover 320 in the front-rear direction of vehicle 1. Device unit 800 includes a junction box 812, an electricity supply unit 814, an electronic control unit 816, a unit cooler 824, and a device cover 830.

Junction box 812 is disposed above upper cover 320. Junction box 812 accommodates relays, fuses, and the like.

As shown in Fig. 3, cooler 500 includes an interposed portion 518 interposed between upper cover 320 and junction box 812. Junction box 812 is cooled by interposed portion 518.

Electricity supply unit 814 is disposed above junction box 812. Electricity supply unit 814 is cooled by unit cooler 824 disposed on electricity supply unit 814.

Electronic control unit 816 is disposed above junction box 812.

Device cover 830 accommodates junction box 812, electricity supply unit 814, electronic control unit 816, and unit cooler 824.

In power storage device 10 described above, when gas is discharged downward from safety valve SV due to a short circuit or the like in any one of power storage cells 100, the gas flows into smoke discharge path S. Then, the gas having flowed into smoke discharge path S spreads in the first direction and is discharged from housing 300 through explosion-proof valve 390 as shown in Fig. 3. Thus, the contents (what is called debris) of power storage cell 100 that are contained in the gas are suppressed from adhering to external terminal 130 and the like of power storage cell 100.

Further, in this power storage device 10, shield portion 600 shields the gap between the end portion of heat insulation member 200 and upper cover 320. Thus, even when dew condensation occurs on the inner surface of upper cover 320, the water droplets therefrom are suppressed from running down upper surface 200a of heat insulation member 200 and coming into contact with external terminal 130 of power storage cell 100, and occurrence of a short circuit caused by contact of water droplets is suppressed.

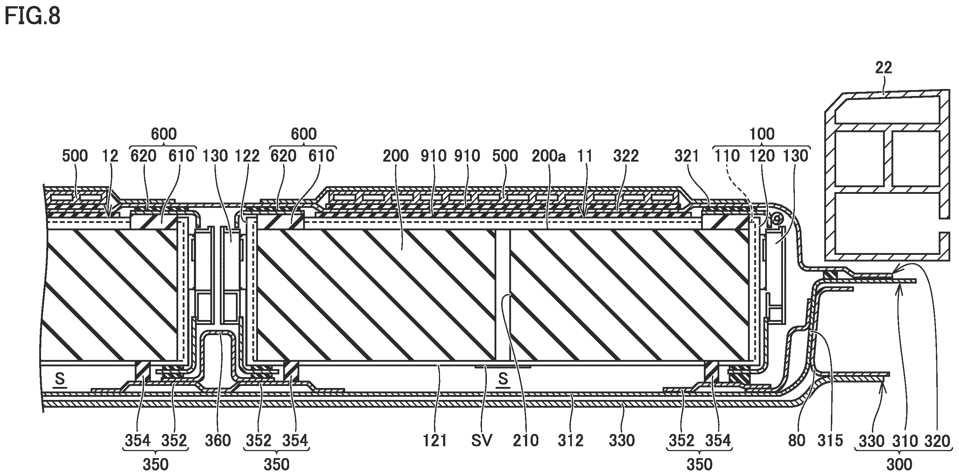

As shown in Fig. 8, each heat insulation member 200 may have a slit 210 extending from upper surface 200a to a lower surface of the corresponding heat insulation member 200. In this case, upper surface 200a of heat insulation member 200 may be inclined gradually downward toward slit 210.

It will be understood by those skilled in the art that the above-described exemplary embodiment is a specific example of the following aspects.

### [Aspect 1]

A power storage device including:
a plurality of power storage cells arranged side by side in a first direction;
a plurality of heat insulation members, each of the heat insulation members being disposed between a pair of power storage cells adjacent to each other among the plurality of power storage cells;
an upper cover disposed above the plurality of power storage cells and the plurality of heat insulation members;
a cooler that cools the plurality of power storage cells, the cooler being disposed on an upper surface of the upper cover; and
a shield portion provided between each of the heat insulation members and the upper cover, wherein
each of the plurality of power storage cells includes
   an electrode assembly,
   a cell case that accommodates the electrode assembly, and
   an external terminal that protrudes from the cell case in a second direction orthogonal to both the first direction and an upward-downward direction, and
the shield portion shields a gap between the upper cover and an end portion of each of the heat insulation members in the second direction.

In the present power storage device, the shield portion shields the gap between the end portion of each heat insulation member and the upper cover. Thus, even when dew condensation occurs on the inner surface of the upper cover, the water droplets therefrom are suppressed from running down the upper surface of each heat insulation member and coming into contact with the external terminal of each power storage cell, and occurrence of a short circuit caused by contact of the water droplets is suppressed.

### [Aspect 2]

The power storage device according to Aspect 1, wherein the end portion of each of the heat insulation members in the second direction is formed at a position farther from a central portion of the cell case in the second direction than an end portion of the cooler in the second direction is from the central portion of the cell case in the second direction.

In the present aspect, effective heat insulation between the pair of power storage cells is achieved, and also, water droplets generated on the inner surface of the upper cover due to dew condensation is more reliably suppressed from reaching the external terminal.

### [Aspect 3]

The power storage device according to Aspect 1 or 2, further including a gap filling portion that fills a gap between the upper cover and an end portion of the cell case in the second direction.

In the present aspect, water droplets generated on the inner surface of the upper cover are suppressed from running down the upper surface of the cell case and reaching the external terminal.

### [Aspect 4]

The power storage device according to any one of Aspects 1 to 3, wherein each of the heat insulation members has a slit extending from an upper surface to a lower surface of a corresponding one of the heat insulation members.

In the present aspect, since the water droplets falling from the inner surface of the upper cover onto the upper surface of each heat insulation member are guided to the lower surface of the corresponding heat insulation member through the slit, the water droplets are suppressed from coming into contact with the external terminal of each power storage cell.

Although the embodiment of the present disclosure has been described, it should be understood that the embodiment disclosed herein is illustrative and non-restrictive in every respect. The scope of the present disclosure is defined by the terms of the claims, and is intended to include any modifications within the scope and meaning equivalent to the terms of the claims.

## Claims

1. A power storage device (10) comprising:
a plurality of power storage cells (100) arranged side by side in a first direction;
a plurality of heat insulation members (200), each of the heat insulation members (200) being disposed between a pair of power storage cells (100) adjacent to each other among the plurality of power storage cells (100);
an upper cover (320) disposed above the plurality of power storage cells (100) and the plurality of heat insulation members (200);
a cooler (500) that cools the plurality of power storage cells (100), the cooler (500) being disposed on an upper surface of the upper cover (320); and
a shield portion (600) provided between each of the heat insulation members (200) and the upper cover (320), wherein
each of the plurality of power storage cells (100) includes
an electrode assembly (110),
a cell case (120) that accommodates the electrode assembly (110), and
an external terminal (130) that protrudes from the cell case (120) in a second direction orthogonal to both the first direction and an upward-downward direction, and
the shield portion (600) shields a gap between the upper cover (320) and an end portion of each of the heat insulation members (200) in the second direction.

2. The power storage device (10) according to claim 1, wherein the end portion of each of the heat insulation members (200) in the second direction is formed at a position farther from a central portion of the cell case (120) in the second direction than an end portion of the cooler (500) in the second direction is from the central portion of the cell case (120) in the second direction.

3. The power storage device (10) according to claim 1 or 2, further
comprising a gap filling portion (650) that fills a gap between the upper cover (320) and an end portion of the cell case (120) in the second direction.

4. The power storage device (10) according to any one of claims 1 to 3,
wherein each of the heat insulation members (200) has a slit (210) extending from an upper surface (200a) to a lower surface (121) of a corresponding one of the heat insulation members (200).
